# EUROPÄISCHE PATENTSCHRIFT

(11) **EP 2 353 896 B1**
(45) Veröffentlichungstag und Bekanntmachung des Hinweises auf die Patenterteilung: **21.10.2015**
(21) Anmeldenummer: 11153654.6
(22) Anmeldetag: 08.02.2011
(51) Int. Cl.: B60H 1/00

(54) **Klimaanlage**
Air conditioning device
Installation de climatisation

(30) Priorität: 10.02.2010 DE 102010001739
(43) Veröffentlichungstag der Anmeldung: 10.08.2011
(73) Patentinhaber: MAHLE Behr GmbH & Co. KG, 70469 Stuttgart (DE)
(72) Erfinder: Wolf, Walter, 71570 Oppenweiler-Zell (DE); Wustlich, Kai, 73773 Aichwald (DE); Schall, Matthias, 73760 Ostfildern-Ruit (DE)
(74) Vertreter: Grauel, Andreas

(56) Entgegenhaltungen:
- EP-A1- 1 930 191
- EP-A2- 0 756 955
- DE-A1- 19 812 233
- DE-A1-102006 055 164
- DE-C1- 19 717 413
- US-A- 4 390 124
- US-A- 5 062 352

## Beschreibung

Die Erfindung betrifft eine Klimaanlage, insbesondere für ein Kraftfahrzeug, gemäß dem Oberbegriff des Anspruchs 1.

Klimaanlagen werden in Kraftfahrzeugen eingesetzt, um den Fahrzeuginnenraum auf eine für die Fahrzeuginsassen angenehme Temperatur zu bringen bzw. diese zu halten. Im Stand der Technik ist eine Vielzahl von verschiedenen Klimaanlagentypen bekannt. Kostengünstige Lösungen umfassen dabei insbesondere einzonige Klimaanlagen, die sich dadurch auszeichnen, dass sie ein Minimum an Bauteilen verwenden, um die geforderten Funktionalitäten zu realisieren. Auch die Bedienung einer derartigen preiswerten einzonigen Klimaanlage erfolgt in der Regel manuell.

Im Stand der Technik sind darüber hinaus Klimaanlage bekannt, bei denen zur Darstellung der Hauptfunktionen Temperaturregelung und Luftverteilung minimal zwei bewegliche Elemente eingesetzt werden. Diese sind meistens in Form einer beweglichen Klappe oder eines ähnlichen Elements ausgebildet. Zur Bedienung einer solchen Klimaanlage werden darüber hinaus auch mindestens zwei Bedienelemente benötigt, die im einfachsten Fall, wie oben bereits erwähnt, manuell zu bedienen sind. Um jedoch ein angenehmes Innenraumklima im Fahrzeug zu erreichen, ist eine automatische Kopplung der Temperatur an die Luftverteilung notwendig. Für den Fahrer bedeutet das manuelle Regeln der Luftverteilung bei Änderung der Temperatureinstellung eine zusätzliche Beladung. Wird diese Nachregelung jedoch nicht durchgeführt, führt dies zu einem thermischen Diskomfort im Fahrzeuginnenraum, was wiederum die Leistungsfähigkeit des Fahrers und somit die Sicherheit beim Fahren negativ beeinflussen kann.

Um dies zu vermeiden, sind im Stand der Technik Klimaanlage bekannt, die nach dem sogenannten "Easy-to-use"-Konzept aufgebaut sind, bei weichen unter anderem vermieden wird, dass zwei Bedienelemente, d. h. eines für die Temperaturregelung und ein weiteres für die Luftverteilung, eingesetzt werden müssen,

Beispielsweise ist eine derartige Klimaanlage für ein Kraftfahrzeug in EP 1 930 191 A1 beschrieben, die von dem Fahrzeuginnenraum zuzuführender Luft zur Temperierung derselben durchströmbar ist, welche eine kombinierte Luftmisch- und Verteilerklappe aufweist. Die kombinierte Luftmisch- und Verteilerklappe ist zumindest teilweise zylinderförmig ausgebildet und dient zur Regelung der Lufttemperatur und der Luftverteilung der dem Fahrzeuginnenraum zuzuführenden Luft. In einem Luftführungsgehäuse der Klimaanlage sind fünf Luftkanäle für die Zufuhrung der warmen, vom Heizer kommenden Luft (Warmluftkanal), für die Zuführung der kalten, direkt vom Verdampfer über einen Bypass vorbei am Heizer geleiteten Luft (Kaltluftkanal), für die Weiterleitung der gemischten, temperierten Luft zur Belüftung des Innenraums des Kraftfahrzeugs (Belüftungskanal), für die Weiterleitung der gemischten, temperierten Luft zum Fußraum (Fußraumkanal) und für die Weiterleitung der warmen Luft zum Entfrosten der Windschutzscheibe (Defrost-kanal) ausgebildet. Die Öffnungen aller Luftkanäle sind im Bereich der Misch- und Verteilerklappe jeweils in einem 36º-Winkel ausgebildet, Die Öffnungen des Warmluftkanals und des Kaltluftkanals sind voneinander um 18° bis 36° beabstandet. Die Mitte des Fußraumkanals ist diagonal gegenüberliegend der kaltluftkanalseitigen Seitenwand des Warmluftkanals angeordnet. Die Öffnungen des Belüftungskanals, des Fußraumkanals und des Defrostkanals sind in direkter Nachbarschaft voneinander angeordnet, wobei sich der Fußraumkanal mittig zwischen dem Belüftungskanal und dem Defrostkanal befindet. Die Misch- und Verteilerklappe weist Flächen auf, welche derart ausgebildet sind, dass sie in einer Stellung, in welcher der eine zuführende Luftkanal vollständig geöffnet ist, den jeweils anderen zuführenden Luftkanal vollständig verschließt.

Diese Klimaanlage ist zwar besonders bedienungsfreundlich für den Fahrer und kann auch kostengünstig hergestellt werden, jedoch kann eine individuelle Anpassung des Fahrzeugklimas an die Bedürfnisse der einzelnen Fahrzeuginsassen hiermit nicht realisiert werden.

Zwei- oder mehrzonige Klimaanlagen, die dagegen deutlich teurer sind, bieten dem Fahrer und anderen Fahrzeuginsassen einen höheren Komfort, einerseits beispielsweise durch elektronische Regelung der Fahrzeuginnenraumtemperatur, aber auch insbesondere durch Ermöglichen einer individuellen Anpassung an die jeweiligen Bedürfnisse der einzelnen Fahrzeuginsassen. So bieten zweizonige Klimaanlagen z. B. die Möglichkeit der getrennten Regelung der Fahrzeuginnentemperatur der linken und der rechten Fahrzeuginnenraumhälfte. Mehrzonige Klimaanlage bieten darüber hinaus noch eine getrennte Regelung des Fahrzeuginnenraums im vorderen und im Heckbereich.

Eine zweizonige Klimaanlage ist aus der Druckschrift US 4,390,124 bekannt. Die Klimaanlage für ein Kraftfahrzeug weist zwei Gehäusehälften auf, die entlang einer longitudinalen Trennungswand verbunden sind. Die Gehäusehälften weisen jeweils zwei spiegelbildliche Räume mit Einlass und Auslasskanälen auf, in die jeweils zwei drehbar gelagerte Flügel angeordnet sind. Mittels der Stellung der Flügel im Gehäuse wird eine Verteilung und Vermischung der warmen und kalten Einlassluft sowie eine Freigabe einer von drei Auslassöffnungen realisiert.

Daher ist es die Aufgabe der vorliegenden Erfindung, eine Klimaanlage für ein Kraftfahrzeug der oben beschriebenen Art zu schaffen, die auf kostengünstige und einfache Art und Weise auf eine zwei- oder mehrzonige Regelung erweitert wird.

Die Aufgabe der vorliegenden Erfindung wird durch eine Klimaanlage mit den Merkmalen gemäß. Anspruch 1 gelöst Vorteilhafte Weiterbildungen der vorliegenden Erfindung sind in den jeweiligen Unteransprüchen definiert.

Erfindungsgemäß wird eine Klimaanlage, insbesondere für ein Kraftfahrzeug, mit einem Luftführungsgehäuse bereitgestellt, in welchem eine Vielzahl von Luftkanälen ausgebildet ist, welche zumindest zwei zuführende Luftkanäle, welche einen Warmluftkanal und einen Kaltlutkanal umfassen, und zumindest drei weiterführende Luftkanäle aufweisen, welche einen Belüftungskanal, einen Fußraumkanal und einen Defrostkanal umfassen, wobei zur Regelung der Lufttemperatur und Luftverteilung der einem Fahrzeuginnenraum zuzuführenden Luft eine erste kombinierte Misch- und Verteilerklappe vorgesehen ist, und wobei zur getrennten Regelung der Lufttemperatur und Luftverteilung im linken und rechten Innenraum des Kraftfahrzeugs zusätzlich eine zweite Kombinierte Misch- und Verteilerklappe vorgesehen ist Durch die erfindungsgemäße Konfiguration kann auf einfache und kostengünstige Weise ein Upgrade einer preisgünstigen und ein Minimum an Bauteilen verwendenden einzonigen Klimaanlage zu einer zumindest zweizonigen Klimaanlage werden, Hierzu vorteilhaftenveise keine aufwändigen Umbauten erforderlich, sondern es wird für das Upgrade lediglich ein Paar von Kombinierten Misch- und Verteilerklappen vorgesehen, welche jede Seite des Kraftfahrzeugs (links/rechts) getrennt öffnen und schließen können. Zusätzlich bietet die erfindungsgemäße Klimaanlage die Vorteile der Kombination der beiden Funktionalitäten Temperaturregelung und Luftverteilung im Hinblick auf die Reduzierung der verwendeten Bauteile und der demzufolge reduzierten Herstellungskosten der Klimaanlage und die Bedienerfreundlichkeit bzw. der Entlastung des Fahrers. Insgesamt kann hierdurch eine kostengünstige Klimaanlage beispielsweise des HVAC-Typs (Heating, Ventilating and Air Conditioning) auch für anspruchsvollere Kraftfahrzeuge geschaffen werden, die dem Fahrer erhöhten Komfort bieten.

Gemäß einer bevorzugten Ausführungsform sind die erste kombinierte Misch- und Verteilerklappe und die zweite Misch- und Verteilerklappe jeweils im Wesentlichen zylindrisch ausgebildet. Besonders bevorzugt sind die erste kombinierte Misch- und Verteilerklappe und die zweite kombinierte Misch-und Verteilerklappe jeweils als Trommelklappe ausgebildet.

Gemäß noch einer bevorzugten Ausführungsform weist die erste kombinierte Misch- und Verteilerklappe einen ersten Antrieb auf.

Gemäß noch einer weiteren bevorzugten Ausführungsform weist die zweite kombinierte Misch- und Verteilerklappe einen zweiten Antrieb auf. Durch die getrennten Antriebe der ersten und zweiten kombinierten Misch- und Verteilerklappe können diese getrennt voneinander geregelt werden und eine getrennte Einstellung der Temperatur- und Belüftungsverhältnisse im linken und rechten Fahrzeuginnenraum wird ermöglicht

Besonders bevorzugt ist darüber hinaus, wenn der erste Antrieb von sowohl der ersten Misch- und Verteilerklappe als auch der zweite Antrieb von der zweiten Misch- und Verteilerklappe in einem Modul vorgesehen sind. Diese Ausführungsform ist besonders im Hinblick auf Wartungsarbeiten bzw. einen Austausch der Antriebe vorteilhaft. Der erste und der zweite Antrieb in dem Modul können dabei getrennt oder synchron ansteuerbar sein, je nach Erfordernissen (zweizonig/einzonig) der Klimaanlage.

Vorzugsweise ist zwischen der ersten kombinierten Misch- und Verteilerklappe und der zweiten kombinierten Misch- und Verteilerklappe eine Trennwand vorgesehen. Die Trennwand ist vorzugsweise eine in dem Luftführungsgehäuse ausgebildete Trennwand,

Gemäß einer weiteren bevorzugten Ausführungsform sind die erste Misch-und Verteilerklappe und die zweite kombinierte Misch- und Verteilerklappe koaxial zueinander angeordnet.

Darüber hinaus kann zur Verbesserung der Stabilität der Strömungsverhältnisse in der ersten und der zweiten Misch- und Verteilerklappe jeweilig eine weitere Trennwand vorgesehen sein.

Besonders bevorzugt ist die erste kombinierte Misch- und Verteilerklappe für die Luftregelung in der linken Fahrzeughälfte und die zweite kombinierte Misch- und Verteilerklappe für die Luftregelung in der rechten Fahrzeughälfte vorgesehen. Hierdurch kann den Fahrzeuginsassen ein erhöhter Komfort geboten werden, da z. B. der Fahrer und der Beifahrer die Klimatisierung entsprechend ihrer individuellen Bedürfnisse getrennt voneinander einstellen können.

Gemäß noch einer weiteren bevorzugten Ausführungsform sind der erste Antrieb und der zweite Antrieb jeweils als mechanischer oder elektrischer Antrieb ausgebildet.

Darüber hinaus können gemäß einer weiteren bevorzugten Ausführungsform der erste und der zweite Antrieb jeweils mittig im Hinblick auf die erste und zweite kombinierte Misch- und Verteilerklappe oder aber seitlich angeordnet sein. Eine mittige Anordnung ermöglicht die Nutzung des Bauraums jeweils zwischen der ersten und zweiten kombinierten Misch- und Verteilerklappe für einen Antriebsmotor als auch beispielsweise für eine Labyrinth-Dichtung.

Darüber hinaus kann gemäß, einer weiteren bevorzugten Ausführungsform eine axiale Antnebsverzahnung, z. B, mittels eine Gerad-Verzahnung, eines Kegelrad, eines Achsversatzes, etc. oder eine radial Verzahnung ebenfalls mittels einer Gerad-Verzahnung, einer radialen Schräg-Verzahnung, etc. implementiert werden.

Vorzugsweise ist die Klimaanlage zumindest als zweizonige Klimaanlage, insbesondere als zweizonige Klimaanlage des HVAC-Typs, ausgebildet.

Besonders bevorzugt ist darüber hinaus, wenn in der ersten kombinierten Misch- und Verteilerklappe und in der zweiten kombinierten Misch- und Verteilerklappe ein Bypass zum Defrost-Kanal vorgesehen ist. Dies kann beispielsweise durch eine Eindrückung in der Trommel der ersten kombinierten Misch- und Vorteilerklappe bzw, der zweiten kombinierten Misch- und Verteilerklappe oder durch Vorsehen eines abgetrennten Kanals erfolgen. Hierdurch wird sichergestellt, dass im Defrost-Betrieb der klimaanlage immer eine Enteisung bzw. Belüftung der gesamten Windschutzscheibe des Kraftfahrzeugs erfolgen kann.

Vorzugsweise können die erste und die zweite kombinierte Misch- und Verteilerklappe im Defrost-Betrieb miteinander synchronisiert sein, wobei die Synchronisation der beiden kombinierten Misch- und Verteilerklappen über eine Kurvenbahn oder über die Ansteuerung der zwei Antriebe der beiden kombinierten Misch- und Verteilerklappen erfolgt. Auch hierdurch kann eine in jedem Fall komplette Enteisung bzw. Belüftung der Windschutzscheibe mit den damit verbundenen verbesserten Sicherheitsaspekten erzielt werden. Bei einem mechanischen Antrieb der beiden kombinierten Misch- und Verteilerklappen ist eine Koppelung für den Defrost-Betrieb über die Kurvenbahn bevorzugt, wobei bei einem elektrischen Antrieb der beiden kombinierten Misch- und Verteilerklappen eine Koppelung für den Defrost-Betrieb über eine Steuerung und eine Regelung im Bediengerät bevorzugt ist.

Gemäß noch einer weiteren bevorzugten Ausführungsform sind bei Ausbildung der Klimaanlage als mehrzonige Klimaanlage eine weitere, erste kombinierte Misch- und Verteilerklappe und eine weitere zweite kombinierte Misch- und Verteilerklappe jeweils zur Luftregelung im linken und rechten Fondbereich des Kraftfahrzeugs vorgesehen. Auch hierbei wird auf kostengünstige und einfache Art und Weise ein weiteres Upgrade ermöglicht, was den Komfort im Fahrzeuginnenraum erheblich erhöht, da nicht nur im vorderen Bereich des Fahrzeuginnenraums sondern auch im hinteren Fahrzeuginnenraum eine getrennte Links-/Rechtsregelung ermöglicht wird.

Vorzugsweise können die erste und zweite kombinierte Misch- und Verteilerklappe im Luftweg der Klimaanlage nach einer Verteilerwalze und einer Schnittstelle zu den Luftkanälen angeordnet sein, das kraftfahrzeugseitig stets gleiche Anschlüsse für die Luftkanäle realisiert werden können. Die erste und zweite kombinierte Misch- und Verteilerklappen können aufgrund des Bauraumbedarfs in der Kanälen der Klimaanlage oder in den Düsen derselben angeordnet sein, damit der Grundaufbau der Klimaanlage nahezu bauraum- und funktionsgleich bleiben kann und die Schnittstellen der Kanäle im Bereich walzennah liegen. Durch diese Anordnung wird der erforderliche Bauraum der Klimaanlage minimal gehalten und der Luftweg zu den Düsen kann als Bauraum mit genutzt werden,

Es ist darüber hinaus vorteilhaft, wenn die erste kombinierte Misch- und Verteilerklappe und die zweite kombinierte Misch- und Verteilerklappe in der Trennwand, welche zwischen der ersten kombinierten Misch- und Verteilerklappe und der zweiten kombinierten Misch- und Verteilerklappe vorgesehen ist, gelagert sind.

Gemäß einer anderen bevorzugten Ausführungsform ist die erste kombinierte Misch- und Verteilerklapple in der zweiten kombinierten Misch- und Verteilerklappe gelagert.

Es ist darüber auch bevorzugt, wenn die erste und die zweite kombinierte Misch- und Verteilerklappe an ihren gegenüberliegenden seitlichen Grundflächen mit einer Labyrinth-Dichtung versehen ist. Diese ist einerseits zur Vermeidung einer Gerauschentwicklung aufgrund des am Lufteintritt und Luftaustritt vorhandenen Druckgefälles vorgesehen, kann vorteilhaftenveise aber andererseits auch zumindest teilweise zur Lagerung der ersten und/oder der zweiten kombinierten Misch- und Verteilerklappe dienen,

Die im Wesentlichen zylindrisch ausgebildete erste und zweite kombinierte Misch- und Verteilerklappe kann jeweils gemäß einer weiteren Ausführungsform über zumindest einen seitlichen Abschnitt konisch ausgebildet sein, um einen besseren seitlichen und zum Fußraum gerichteten Abgang zu gewährleisten.

Darüber hinaus können die erste und zweite kombinierte Misch- und Verteilerklappe merkmale von Schleppklappen oder Überströmkanäle zur Abstimmung der Temperaturschichtung und Verteilung aufweisen.

Im Folgenden wird die Erfindung anhand von Ausführungsbeispilen unter Bezugnahme auf die Zeichnung detailliert erläutert. In der Zeichnung zeigen:
- Fig.1: einen Schnitt durch eine erste kombinierte Misch- und Verteilerklappe gemäß dem Stand der Technik;
- Fig. 2A, 2B: jeweilige perspektivische Ansichten der in Fig. 1 dargestellten ersten kombinierten Misch- und Verteilerklappe;
- Fig. 3: eine Schnittansicht einer Anordnung einer ersten und zweiten kombinierten Misch- und Verteilerklappe gemäß einer Ausführungsform;
- Fig. 4: eine perspektivische Ansicht eines Abschnitts eines Luftführungsgehäuses gemäß einer Ausführungsform;
- Fig. 5A bis 5F: jeweilig schematisch verschiedene Lagerungsmöglichkeiten der ersten und zweiten kombinierten Misch- und Verteilerklappe;
- Fig. 5F bis 5H: jeweilig eine Detailansicht einer Lagerungsmöglichkeit;
- Fig. 6A, 6B: jeweilig verschiedene Formen der ersten und zweiten kombinierten Misch- und Verteilerklappe;
- Fig. 7: schematisch eine Anordnung der ersten und zweiten kombinierten Misch- und Verteilerklappen mit einem Antriebsmodul dazwischen angeordnet;
- Fig. 8A bis 8C: jeweilig schematisch eine Ausführungsform eines Antriebsmoduls von der Seite;
- Fig. 9A bis 9C: jeweilig schematisch eine weitere Ausführungsform eines Antriebsmoduls von der Seite;
- Fig. 10: schematisch noch eine weitere Ausführungsform eines Antriebsmoduls von der Seite;
- Fig. 11A bis 11C: jeweilig schematisch noch eine weitere Ausführungsform eines Antriebsmoduls von der Seite;
- Fig. 12A, 12B: schematisch einen Aufbau für einen zwei- bzw. einen zweizonigen Betrieb;
- Fig. 13A bis 13C: verschiedene Anordnungsmöglichkeiten von Aktuatoren eines Antriebsmoduls in einer Kraftfahrzeugklimaanlage; und
- Fig. 14: eine weitere Anordnungsmöglichkeit von Aktuatoren in einer Kraftfahrzetigklimaanlage.

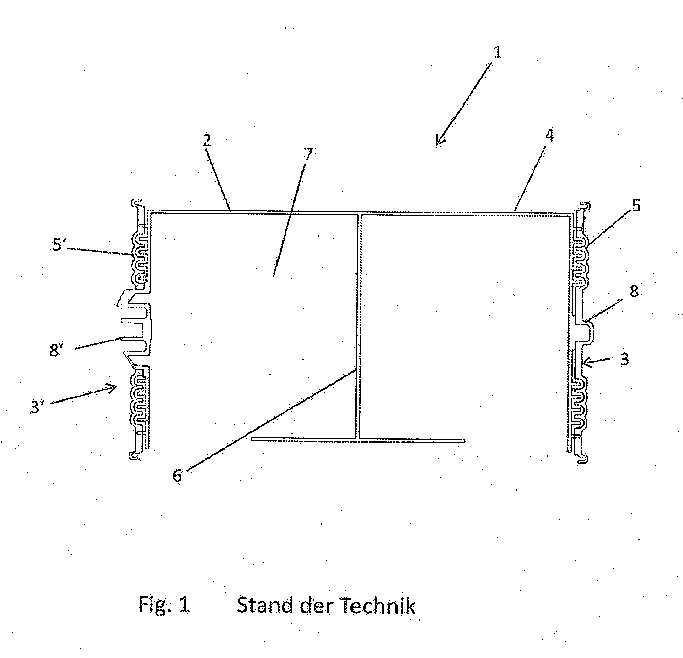

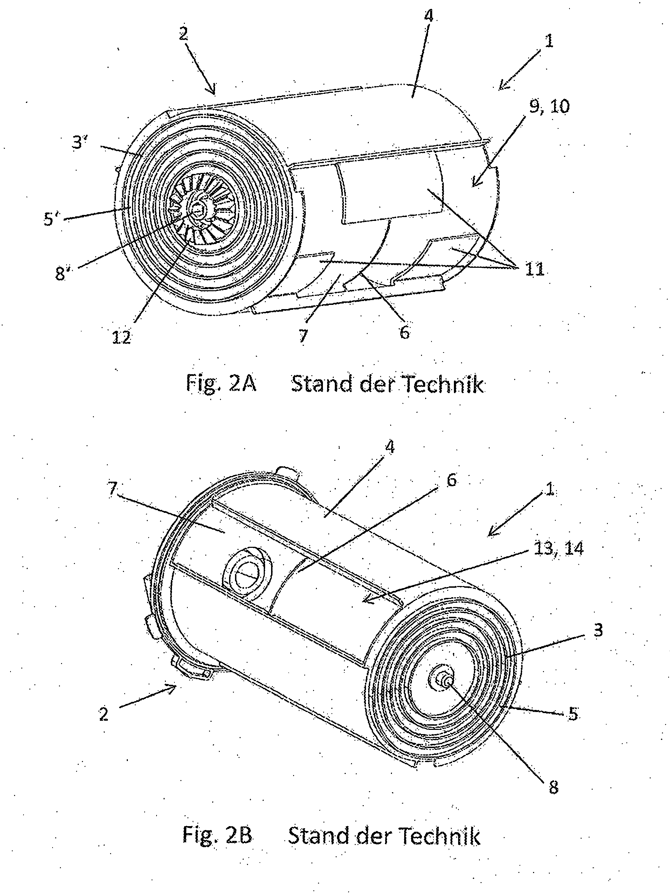

Fig. 1 zeigt einen Schnitt durch eine erste kombinierte Misch- und Verteilerklappe 1 gemäß dem Stand der Technik. Die erste kombinierte Misch- und Verteilerklappe 1 ist als Trommelklappe ausgebildet und weist einen im Wesentlichen zylindrischen Körper 2 auf, an dessen Zylindermantelfläche 4 ein Lufteintritt und ein Luftaustritt vorgesehen sind, die im Zusammenhang mit Figuren 2A und 2B noch näher beschrieben werden. An gegenüberliegenden seitlichen Grundflächen 3, 3'der ersten kombinierten Misch- und Verteilerklappe 1 ist jeweilig eine Labyrinth-Dichtung 5, 5' zu den oben bereits beschriebenen Zwecken angeordnet. Weiterhin weisen die seitlichen Grundflächen 5, 5' jeweils eine erste Einrichtung 8 und eine zweite Einrichtung 8' zur Lagerung der ersten kombinierten Misch- und Verteilerklappe 1 auf Darüber hinaus ist eine Trennwand 6 zur Stabilisierung der Luftströmungsverhäitnisse im Innenraum 7 der ersten kombinierten Misch- und Verteilerklappe 1 vorgesehen, die integral mit der Zylindermantelfläche 4 ausgebildet ist, und die den Innenraum 7 der ersten kombinierten Misch- und Verteileriklappe 1 in zwei im Wesentlichen gleiche Hälften unterteilt.

Fig. 2A, 2B zeigen jeweilige perspektivische Ansichten der in Fig. 1 dargestellten ersten kombinierten Misch- und Verteilerklappe 1. In Fig. 2A ist dabei die erste kombinierte Misch- und Verteilerklappe 1 in einer Position dargestellt, wo der Luftaustritt 9 nach vorne gerichtet und erkennbar ist Der Luftaustritt 9 ist dabei als erste Öffnung 10 mit drei in die erste Öffnung 10 ragenden Abdeckungen 11 ausgebildet, die die erste Öffnung 10 teilweise abdecken. Die Abdeckungen 11 bilden eine Art von Spoilern, die einerseits einen zeitlichen Verzug der Luftströmung bewirken und andererseits zur Mischung von in den Innenraum 7 der ersten Misch- und Verteilerklappe 1 strömenden Kalt- und Warmluft vorgesehen sind. An der seitlichen Grundfläche 3' ist die zweite Einrichtung zur Lagerung 8' erkennbar, die hier als Vorsprung mit einer Innensechskantöffnung ausgebildet ist. Um die zweite Einrichtung zur Lagerung 8' herum angeordnet ist ein Kegelrad 12 als ein Element des Antriebs erkennbar.

In Fig. 2B ist die erste kombinierte Misch- und Verteilerklappe 1 dagegen in einer Position dargestellt, wo der Lufteintritt 13 nach vorne gerichtet ist. Im Gegensatz zu dem in Fig. 2A dargestellten Luftaustritt 9 sind in dem Lufteintritt keine Spoiler angeordnet und eine zweite Öffnung 14 erstreckt sich im Wesentlichen gleichmäßig über die gesamte Breite eines Abschnitts der Zylindermantelfläche 4. Darüber hinaus ist die seitliche Grundfläche 3 erkennbar, an der die erste Einrichtung 8 zur Lagerung der ersten kombinierten Misch- und Verteilerklappe 1 vorgesehen ist, welche im Gegensatz zur zweiten Einrichtung zur Lagerung 8' auf der gegenüberliegenden Seite, an welcher ebenfalls der Antrieb angeordnet wird, lediglich als Vorsprung ohne Öffnung ausgebildet ist. Es ist im Rahmen eines Gleichteilkonzepts jedoch auch möglich, die erste Einrichtung 8 zur Lagerung ebenfalls mit einer Innensechskantöffnung für einen Direktantrieb von außen oder mit einem Kegelrad zu versehen.

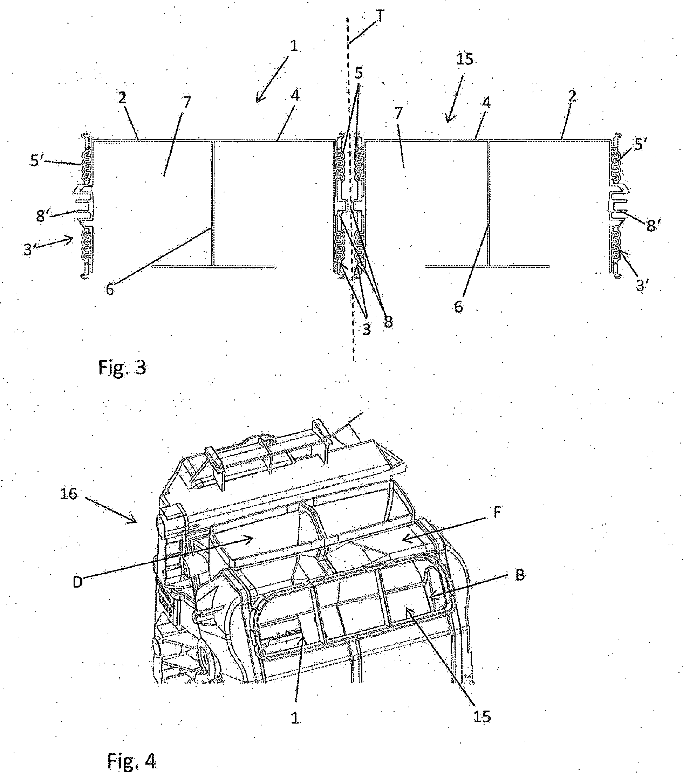

Fig. 3 zeigt eine Schnittansicht einer Anordnung einer ersten kombinierten Misch- und Verteilerklappe 1 und einer zweiten kombinierten Misch- und Verteilerklappe 15 gemäß einer Ausführungsform. Die erste kombinierte Misch-und Verteilerklappe 1 ist dabei entsprechend der im Zusammenhang mit Fig. 1 beschriebenen ersten Misch- und Verteilerklappe 1 ausgebildet und die zweite Misch- und Verteilerklappe 15 weist ebenfalls die gleichen Elemente auf, jedoch in einer bezüglich einer durch die gestrichelte Linie T angedeuteten Trennebene spiegelsymmetrischen Anordnung. Die beiden im Wesentlichen zylinderförmig ausgebildeten Trommelklappen sind dabei koaxial in einem hier nicht dargestellten Luftführungsgehäuse der Klimaanlage angeordnet, welches in Zusammenhang mit Fig. 4 näher beschrieben wird.

Fig.4 zeigt eine perspektivische Ansicht eines Abschnitts eines Luftführungsgehäuses 16 einer Klimaanlage gemäß einer Ausführungsform im Bereich der ersten kombinierten Misch- und Verteilerklappe 1 und der zweiten kombinierten Misch- und Verteilerklappe 15. Ein hier nicht dargestellter Warmluftkanal sowie ein ebenfalls nicht dargestellter Kaltluftkanal führen Warm- bzw. Kaltluft zu einem Defrostkanal D, einem Fußraumkanal F und einem Belüftungskanal B. Die aus dem Defrostkanal D ausgegebene Luftströmung dient dabei zur Enteisung bzw. Belüftung der Windschutzscheibe eines Kraftfahrzeugs, die über den Fußraumkanal F ausgegebene Luftströmung dient zur Belüftung bzw. Temperierung des Fußraums und der Belüftungs~ kanal B dient zur Weiterleitung von gemischter, temperierter Luft zur Belüftung des Fahrzeuginnenraums, Die erste kombinierte Misch- und Verteilerklappe 1, die koaxial zu der zweiten kombinierten Misch- und Verteilerklappe 15 in dem Luftführungsgehäuse 16 angeordnet ist, dient dabei zur kombinierten Temperatur- und Luftverteilungsregelung der linken Fahrzeuginnenraumhälfte und die zweite kombinierte Misch- und Verteilerklappe 15 dient zur davon getrennten kombinierten Steuerung der Temperatur- und Luftverteilungisverhältnisse in der rechten Fahrzeuginnenraumhälfte. Wie erkennbar ist, befindet sich die erste kombinierte Misch- und Verteilerklappe 1 in einer Stellung, in der durch die erste Öffnung 10 eine Luftströmung durch den Belüftungskanal B austreten kann, während die zweite kombinierte Misch- und Verteilerklappe 15 in einer Stellung ist, in der der Belüftungskanal B vollständig ist.

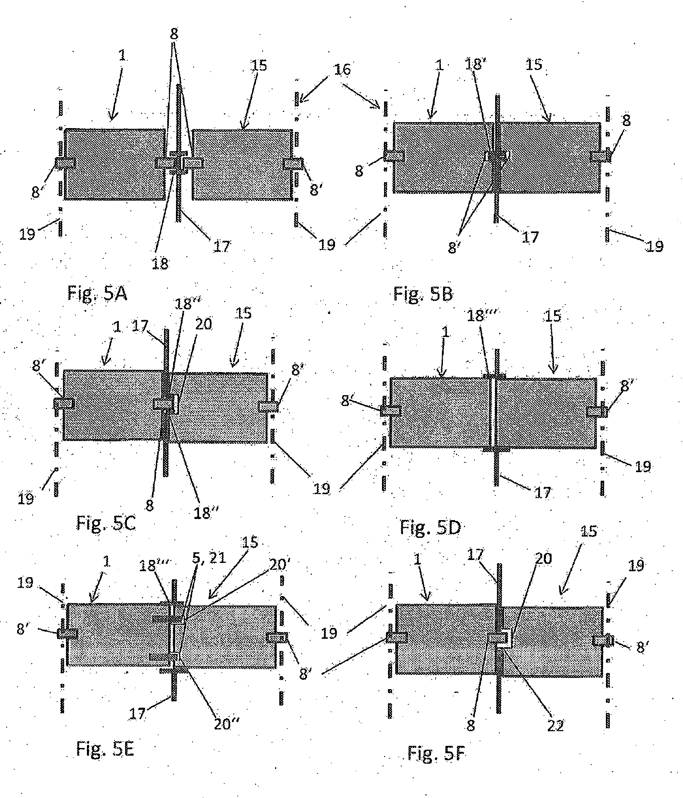

Fig. 5A bis 5F zeigen jeweilig schematisch verschiedene Lagerungsmöglichkeiten der ersten kombinierten Misch- und Verteilerklappe 1 und zweiten kombinierten Misch- und Verteilerklappe 15. In Fig. 5A sind dabei die erste Misch- und Verteilerklappe 1 und die zweite Misch- und Verteilerklappe 15 koaxial in dem Luftführungsgehäuse 16 mit einer dazwischen angeordneten Trennwand 17 an dieser gelagert. Die jeweiligen ersten Einrichtungen zur Lagerung 8 sind dabei in einem an der Trennwand 17 vorgesehenen Lager 18 angeordnet und die jeweiligen zweiten Einrichtungen zur Lagerung 8' sind jeweils in einer Gehäusewandung 19 des Luftführungsgehäuses 16 gelagert. Bei dieser Konfiguration können Gleichteile als erste kombinierte Misch- und Verteilerklappe 1 und zweite kombinierte Misch- und Verteilerklappe 15 verwendet werden. In Fig. 5B ist eine ähnliche Lagerung der ersten kombinierten Misch- und Verteilerklappe 1 und der zweiten kombinierten Misch- und Verteilerklappe 15 dargestellt, wobei jedoch die erste Misch- und Verteilerklappe 1 und die zweite Misch- und Verteilerklappe 15 spiegelverkehrt angeordnet sind, so dass die jeweiligen zweiten Einrichtungen zur Lagerung 8' auf einem Lager 18' an der Trennwand 17 gelagert sind, wohingegen die jeweiligen ersten Einrichtungen zur Lagerung 8 jeweils in der Gehäusewandung 19 des Luftführungsgehäuses 16 gelagert sind. In Fig. 5C ist eine weitere mittige Lagerung der ersten und zweiten kombinierten Misch- und Verteilerklappen 1, 15 an einem Lager 18" der Trennwand 17 dargestellt, wobei die erste kombinierte Misch-und Verteilerklappe 1 mit der ersten Einrichtung 8 in dem Lager 18" aufgenommen ist, und die zweite kombinierte Misch- und Veiteilerklappe 15 an der seitlichen Grundfläche 3 eine Ausnehmung 20 aufweist, welche das Lager 18" aufnimmt, Fig. 5D zeigt eine Lagerungsmöglichkeit der ersten und zweiten kombinierten Misch- und Verteilerklappen 1, 15 von außen im Gegensatz zu der in Fig. 5A bis 5C dargestellten mittigen Lagerungsmöglichkeiten, wobei an der Trennwand 17 ein Lager 18"' vorgesehen ist, das die ersten und zweiten kombinierten Misch- und Verteilerklappen 1, 15 von außen lagert. Darüber hinaus sind die ersten und zweiten kombinierten Misch- und Verteilerklappen 1,15 jeweils in der Gehäusewandung 19 gelagert. Fig. 5E zeigt eine weitere Variante der in Fig. 5D gezeigten Ausführungsform, wobei eine Lagerung an Rippen 21 der Labyrinth-Dichtung 5 in entsprechenden Ausnehmungen 20', 20" in der seitlichen Grundfläche 3 der zweiten kombinierten Misch- und Verteilerklappe 15 realisiert ist. Hierbei sind die Rippen 21 der Labyrinth-Dichtung 5 bezüglich der ersten und zweiten Misch- und Verteilerklappen 1, 15 konzentrisch versetzt zueinander ausgebildet, wodurch axial Bauraum gespart wird, da hierbei die Rippen 21 der ersten Misch- und Verteilerklappe 1 beispielsweise in einen Spalt zwischen den Rippen 21 der zweiten Misch- und Verteilerklappe 15 eingreifen. Gleichzeitig kann in dieser Ausführungsform die Trennwand 17 nur mit minimaler Wandstärke ausgebildet werden, und die Kreisfläche im Bereich der Trommel kann fehlen, was eine weitere Material- und Bauraumersparnis bewirkt Schließlich zeigt Fig. 5F eine Lagerung der ersten kombinierten Misch- und Verteilerklappe 1 in einer Ausnehmung 20 in der zweiten kombinierten Misch- und Verteilerklappe 15. Die Trennwand 17 ist hierzu an der Lagerungsstelle entsprechend mit einer Öffnung 22 versehen.

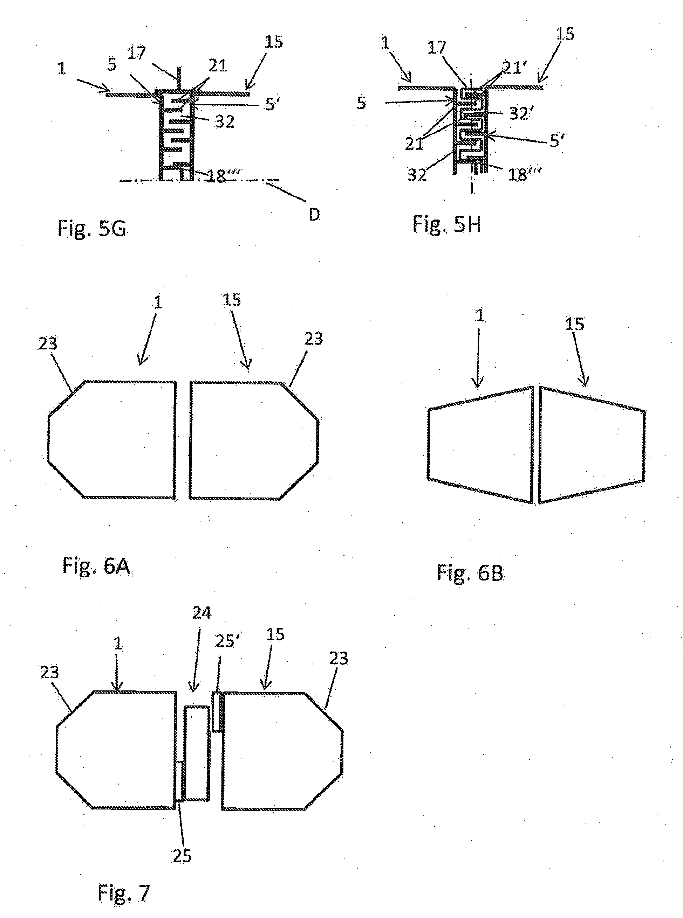

Fig. 5G und 5H zeigen jeweils eine Detailansicht einer Lagerungsmöglichkeit. Die Figuren zeigen dabei lediglich einen Abschnitt der ersten und zweiten kombinierten Misch- und Verteilerklappen 1, 15 bzw. einen oberen Abschnitt davon bis ihrer Drehachse D. Die in Fig. 5G dargestellte Ausführungsform realisiert eine achsnahe Lagerung auf kleinem Durchmesser, wobei die erste kombinierte Misch- und Verteilerklappe, 1 in der zweiten kombinierten Misch- und Verteilerklappe 15 gelagert ist, indem Rippen 21 der Labyrinth-Dichtung 5 der ersten kombinierten Misch- und Verteilerklappe 1 in Labyrinth-Nuten 32 der Labyrinth-Dichtung 5' der zweiten kombinierten Misch~ und Verteilerklappe 15 eingreifen und umgekehrt, d. h. Rippen 21 der Labyrinth-Dichtung 5' der zweiten kombinierten Misch- und Verteilerklappe 15 greifen in Labyrinth-Nuten 32 der Labyrinth-Dichtung 5 der ersten kombinierten Misch- und Verteilerklappe 1 ein. In Fig. 5H ist eine weitere Lagerungsmöglichkeit auf kleinem Durchmesser dargestellt, wobei die Trennwand 17 mit Labyrinth-Nuten 32' ausgebildet ist, in die jeweils Rippen 21 der ersten und zweiten kombinierten Misch- und Verteilerklappen 15 eingreifen. Außerdem greifen entsprechend in der Trennwand 17 ausgebildete Rippen 21' in die Labyrinth-Nuten 32 der Labyrinth-Dichtungen 5, 5' der ersten und zweiten kombinierten Misch- und Verteilerklappen 1, 15 ein.

Fig. 6A und 6B zeigen jeweilig verschiedene Formen der ersten und zweiten kombinierten Misch- und Verteilerklappen 1, 15. Gemäß einer in Fig. 6A dargestellten Ausführungsform ist ein jeweiliger Endabschnitt 23 der ersten und zweiten kombinierten Misch- und Verteilerklappen 1, 15 konisch ausgebildet, was für die Luftführung zum Fußraumabgang in dem Luftführungsgehäuse von Vorteil ist, Außerdem wird dadurch, dass die Luftströmung horizontal und über die Fase verläuft, eine weichere Luftumlenkung erzielt. Die in Fig. 6B dargestellte Ausführungsform ist dagegen über den gesamten Bereich der jeweiligen ersten und zweiten kombinierten Misch- und Verteilerklappe 1, 15 konisch ausgeführt.

Fig.7 zeigt schematisch eine Anordnung der ersten und zweiten kombinierten Misch- und Verteilerklappen 1, 15 mit einem Antriebsmodul 24, welches dazwischen angeordnet ist. Die Ausbildung der ersten und zweiten kombinierten Misch- und Verteilerklappe 1, 15 entspricht hier der in Fig. 6A gezeigten Ausführungsform. Mittig zwischen der ersten kombinierten Misch- und Verteilerklappe 1 und der zweiten kombinierten Misch- und Verteilerklappe 15 ist, das Antriebsmodul 24 angeordnet. Hierzu ist ein Abstand zwischen der ersten kombinierten Misch- und Verteilerklappe 1 und der zweiten kombinierten Misch- und Verteilerklappe 15 von ca. 40 mm für den Einbau des Antriebsnmoduls 24 notwendig. Das Antriebsmodul 24 umfasst einen ersten und einen zweiten Antrieb, die hier nicht im Detail dargestellt sind. Der erste Antrieb ist für die erste kombinierte Misch- und Verteilerklappe 1 vorgesehen und steht mit dieser über ein Abtriebsrad 25 in Verbindung, und der zweite Antrieb ist für die zweite kombinierte Misch- und Verteilerklappe 15 vorgesehen und steht mit dieser über ein Abtriebsrad 25' in Verbindung. Die beiden Antriebe können beispielsweise für den Fall, dass das Antriebsmodul 24 in einer einzonigen Klimaanlage eingesetzt wird, miteinander gekoppelt sein. Bei einer zweizonigen Klimaanlage sind die beiden Antriebe Jedoch getrennt voneinander steuerbar.

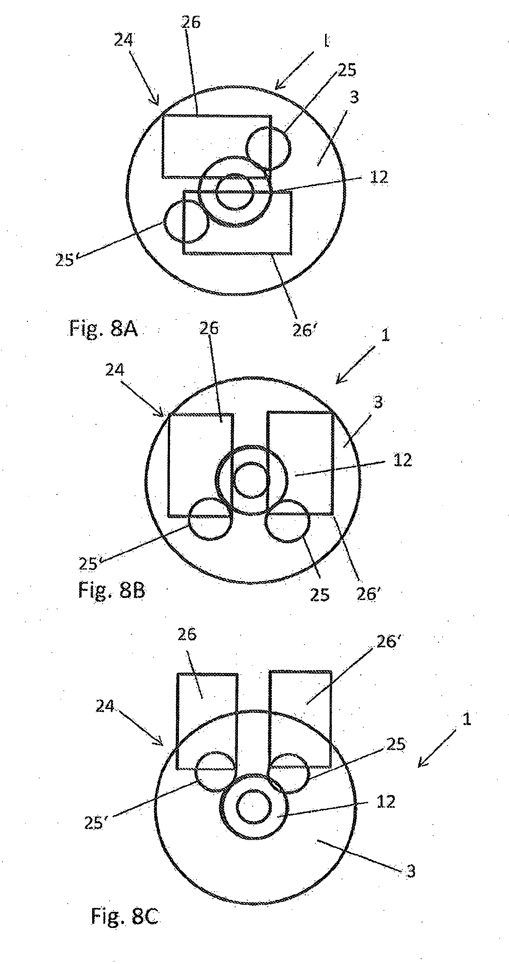

Fig. 8A bis 8C zeigen schematisch jeweils eine Ausführungsform eines Antriebsmoduls 24, welches auf einer seitlichen Grundfläche 3 der ersten kombinierten Misch- und Verteilerklappe 1 angeordnet ist, Hierbei sind verschiedene Anordnungsmöglichkeiten dargestellt. Ein Aktuator 26, der für den Antrieb der ersten kombinierten Misch- und Verteilerklappe 1 vorgesehen ist, steht dabei jeweils über ein Abtriebsrad 25 mit einem Zahnrad oder Kegelrad 12 in Verbindung. Ein weiterer Aktuator 26', der für den Antrieb der zweiten kombinierten Misch- und Verteilerklappe 15 vorgesehen ist, steht über ein Abtriebsrad 25' mit dem Kegelrad 12 in Verbindung,

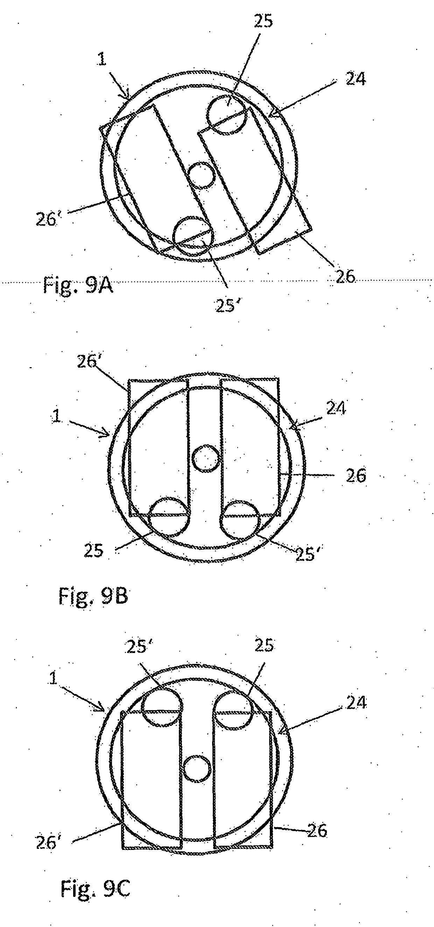

Fig. 9A bis 9C zeigen schematisch jeweils weitere Ausführungsform eines Antriebsmoduls 24 von der Seite. Es sind wiederum verschiedene Anordnungsmöglichkeiten dargestellt. Hier stehen der Aktuator 26 über das Abtriebsrad 25 und der Aktuator 26' über das Abtriebsrad 25' jeweils mit einer an der ersten kombinierten Misch- und Verteilerklappe 1 oder der zweiten kombinierten Misch- und Verteilerklappe 15 vorgesehenen Innenverzahnung in Eingriff.

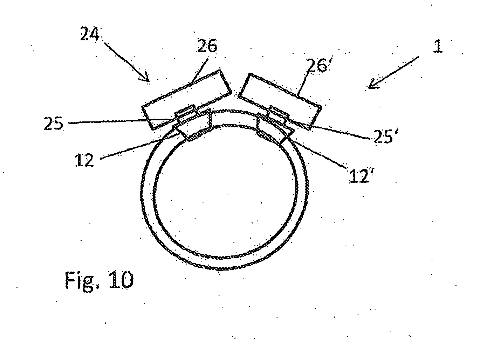

Fig. 10 zeigt schematisch noch eine weitere Ausführungsform eines Antriebsmoduls 24 von der Seite, wobei der Antrieb der ersten kombinierten. Misch- und Verteilerklappe 15 über einen Aktuator 26 erfolgt, der über ein Abtriebsrad 25 und ein Kegelrad 12 und der Antrieb der zweiten kombinierten Misch- und Verteilerklappe 15 über einen Aktuator 26' erfolgt, der über das Antriebsrad 25' und das Kegelrad 12' übertragen wird.

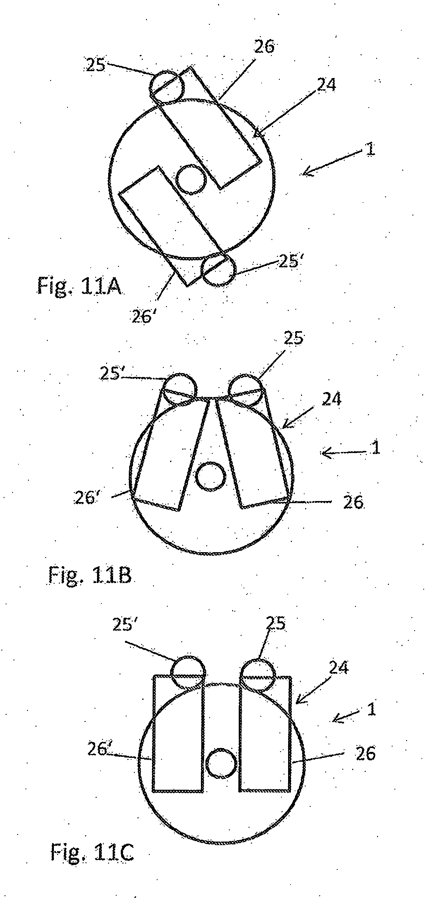

Fig. 11A bis 11C zeigen schematisch noch eine weitere Ausführungsform eines Antriebsmoduls 24 von der Seite. Auch hier sind verschiedene Anordnungsmöglichkeiten dargestellt. Hierbei stehen die Aktuatoren 26, 26' jeweils über ein Abtriebsrad 25, 25' mit einer an der ersten kombinierten Misch- und Verteilerklappe 1 oder der zweiten kombinierten Misch- und Verteilerklappe 15 vorgesehenen Außenverzahnung in Eingriff. Der Einbauraum des Antriebsmoduls 24 ist bei dieser Innenanordnung der Aktuatoren und Außenanordnung der Antriebsräder in Y um eine Bauhöhe des Aktuators geringer wie bei einer Anordnung konventionell beidseitig außen an der Klimaanlage.

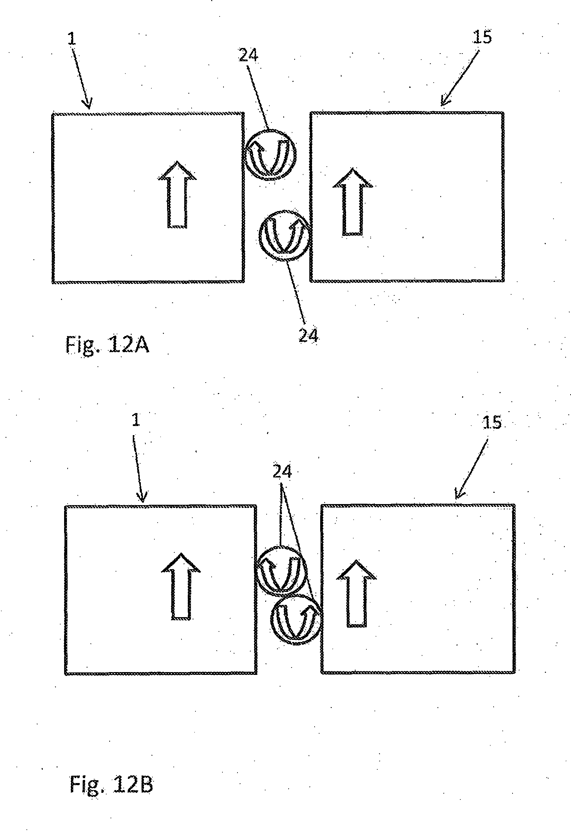

Fig. 12A zeigt schematisch einen Aufbau einer ersten kombinierten Misch-und Verteilerklappe 1 und einer zweiten kombinierten Misch- und Verteilerklappe 15 mit jeweils einem eigenen Antriebsmodul 24. Für den zweizonigen Betrieb, wie in Fig. 12A dargestellt, treibt jedes Antriebsmodul 24 diejenige kombinierte Misch- und Verteilerklappe an, an welche es gekoppelt ist, wobei die Bewegungs- bzw. Drehrichtungen der ersten und zweiten kombinierten Misch- und Verteilerklappen 1, 15 und der Antriebsmodule 24 durch die Pfeile angedeutet ist. Für den einzonigen Betrieb, wie in Fig. 12B dargestellt ist, werden jedoch die beiden getrennten Antriebsmodule 24 miteinander gekoppelt, beispielsweise mittels eines Adapters, der z. B. in der hier nicht im Detail dargestellten Trennwand angeordnet werden kann, um einen synchronen Antrieb für die erste kombinierte Misch- und Verteilerklappe 1 und die zweite kombinierte Misch- und Verteilerklappe 15 vorzusehen. Die beiden Antriebsmodule 24 können auch über ein bzw. zwei Zahnräder, eine Steckwelle oder durch Verclipsen aneinander gekoppelt werden.

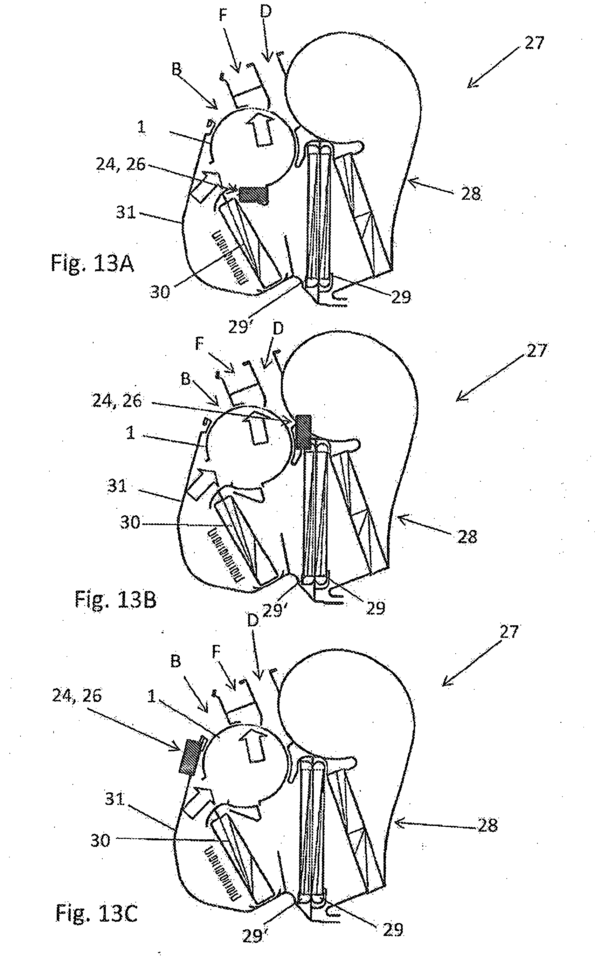

Fig. 13A bis 13C zeigen verschiedene Anordnungsmöglichkeiten von Aktuatoren 26 eines Antriebsmoduls 24 in einer Kraftfahrzeugklimaanlage 27 mit einem in einem Luftführungsgehäuse 31 angeordneten Filter-Gebläsetrakt 28 und einem ersten Wärmetauscher 29 und einem zweiten Wärmetauscher 29' und einer Heizeinrichtung 30. Ebenfalls in dem Luftführungsgehäuse 31 stromabwärts der Luftaustritte für Belüftung B, Fußraum F und Defrost D angeordnet sind auch die erste kombinierte Misch- und Verteilerklappe 1 und die hier nicht sichtbare zweite Misch- und Verteilerklappe 15. Fig. 13 A bis 13C zeigen dabei verschiedene Anordnurigsmöglichkeiten des Aktuators 26 bzw. Antriebsmoduls 24 bezüglich der ersten kombinierten Misch- und Verteilerklappe 1 bzw. der hier nicht sichtbaren zweiten kombinierten Misch- und Verteilerklappe 15 an einem jeweiligen äußeren Umfang davon.

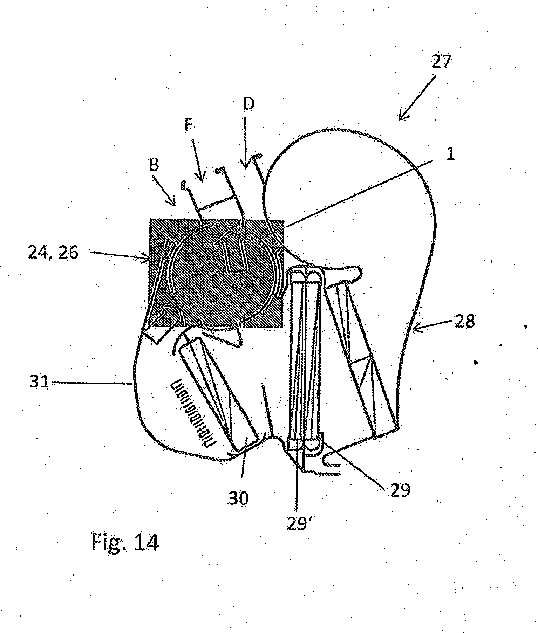

Fig.14 zeigt schließlich eine weitere Anordntingsmöglichkeit des Aktuators 26 eines Antriebsmoduls 24 in einer Kraftahrzetigklimaanlage, wobei hier der Aktuator zwischen der ersten kombinierten Misch- und Verteilerklappe 1 und der zweiten kombinierten Misch- und Vorteilerklappe 15 angeordnet ist, was durch die grau markierte Fläche schematisch angedeutet ist,

Weitere Anordnungen des Antriebsmoduls 24 mit anderen Winkeln und anderen Richtungen sind im Hinblick auf ein servicefreundiiches Design ebenfalls möglich.

Insgesamt betrachtet kann mit der erfindungsgemäßen Konfiguration auf einfache und somit kostengünstige Art und Weise eine einzonige Klimaanlage auf eine zwei- oder mehrzonige Klimaanlage erweitert werden.

### Bezugszeichenliste

- 1: kombinierte erste Misch- und Verteilerklappe
- 2: zylindrischer Körper
- 3, 3': seitliche Grundflächen des zylindrischen Körpers
- 4: Zylindermantelfläche
- 5, 5': Labyrinth-Dichtung
- 6: Trennwand
- 7: Innenraum
- 8: erste Einrichtung zur Lagerung
- 8': zweite Errichtung zur Lagerung
- 9: Luftaustritt
- 10: erste Öffnung
- 11: Abdeckungen
- 12: Kegelrad
- 13: Lufteintritt
- 14: zweite Öffnung
- 15: kombinierte zweite Misch- und Verteilerklappe
- 16: Luftführungsgehäuse
- 17: Trennwand
- 18, 18', 18'" 18"": Lager
- 19: Gehäusewandung
- 20, 20', 20": Ausnehmung
- 21, 21': Rippen
- 22: Öffnung in Trennwand
- 23: Endabschnitt
- 24: Antriebsmodul
- 25, 25': Abtriebsrad
- 26, 26': Aktuator
- 27: Kraftfahizeugklimaanlage
- 28: Gebläse-Filter-Trakt
- 29: erster Wärmetauscher
- 29': zweiter Wärmetauscher
- 30: Heizeinrichtung
- 31: Luftführungsgehäuse
- 32, 32': Labyrinth-Nuten
- T: Trennebene
- D: Drehachse

## Patentansprüche

1. Klimaanlage, insbesondere für ein Kraftfahrzeug, mit einem Luftführungsgehäuse (16), in welchem eine Vielzahl von Luftkanälen ausgebildet ist, welche zumindest zwei zuführende Luftkanäle, welche einen Warmluftkanal und einen Kaltluftkanal umfassen, und zumindest drei weiterführende Luftkanäle aufweisen, welche einen Belüftungskanal (B), einen Fußraumkanal (F) und einen Defrostkanal (D) umfassen, wobei zur Regelung der Lufttemperatur und Luftverteilung der einem Fahrzeuginnenraum zuzuführenden Luft eine erste kombinierte Misch- und Verteilerklappe (1) vorgesehen ist, wobei zur getrennten Regelung der Lufttemperatur und Luftverteilung im linken und rechten Innenraum des Kraftfahrzeugs zusätzlich eine zweite kombinierte Misch- und Verteilerklappe (15) vorgesehen ist, wobei die erste kombinierte Misch- und Verteilerklappe (1) und die zweite Misch- und Verteilerklappe (15) jeweils im Wesentlichen zylindrisch als Trommelklappe ausgebildet sind, wobei zwischen der ersten kombinierten Misch-und Verteilerklappe (1) und der zweiten kombinierten Misch-und Verteilerklappe (15) eine Trennwand (17) vorgegehen ist und die erste Misch- und Verteilerklappe (1) und die zweite kombinierte Misch- und Verteilerklappe (15) koaxial zueinander angeordnet sind, wobei ein Antriebsmodul (24) zum Antrieb der Misch- und Verteilerklappen (1, 15) vorgesehen ist, welches mittig zwischen der ersten Misch-und Verteilerklappe (1) und der zweiten Misch- und Verteilerklappe (15) angeordnet ist.

2. Klimaanlage nach Anspruch 1, **dadurch gekennzeichnet, dass** die erste kombinierte Misch- und Verteilerklappe (1) einen ersten Antrieb aufweist.

3. Klimaanlage nach einem oder mehreren der Ansprüche 1 bis 2, **dadurch gekennzeichnet, dass** die zweite kombinierte Misch- und Verteilerklappe (15) einen zweiten Antrieb aufweist.

4. Klimaanlage nach Anspruch 3, **dadurch gekennzeichnet, dass** der erste Antrieb und der zweite Antrieb in dem Antriebsmodul (24) angeordnet sind.

5. Klimaanlage nach einem oder mehreren der Ansprüche 1 bis 4, **dadurch gekennzeichnet, dass** die erste kombinierte Misch- und Verteilerklappe (1) für die Luftregelung in der linken Fahrzeughälfte und die zweite kombinierte Misch-und Verteilerklappe (15) für die Luftregelung in der rechten Fahrzeughälfte vorgesehen ist.

6. Klimaanlage nach einem oder mehreren der Ansprüche 1 bis 4, **dadurch gekennzeichnet, dass** der erste Antrieb und der zweite Antrieb getrennt steuerbar sind.

7. Klimaanlage nach einem oder mehreren der Ansprüche 1 bis 6, **dadurch gekennzeichnet, dass** der erste Antrieb und der zweite Antrieb jeweils als mechanischer oder elektrischer Antrieb ausgebildet ist.

8. Klimaanlage nach einem oder mehreren der Ansprüche 1 bis 7, **dadurch gekennzeichnet, dass** die Klimaanlage zumindest als zweizonige Klimaanlage ausgebildet ist.

9. Klimaanlage nach einem oder mehreren der Ansprüche 1 bis 8, **dadurch gekennzeichnet, dass** in der ersten kombinierten Misch- und Verteilerklappe (1) und der zweiten kombinierten Misch- und Verteilerklappe (15) jeweils ein Bypass zu einem Defrost-Kanal (D) vorgesehen ist.

10. Klimaanlage nach einem oder mehreren der Ansprüche 1 bis 9, **dadurch gekennzeichnet, dass** die erste und zweite kombinierte Misch- und Verteilerklappe (1, 15) im Defrost-Betrieb miteinander synchronisierbar sind.

11. Klimaanlage nach einem oder mehreren der Ansprüche 1 bis 10, **dadurch gekennzeichnet, dass** bei Ausbildung der Klimaanlage als mehrzonige Klimaanlage eine weitere erste kombinierte Misch- und Verteilerklappe (1) und eine weitere zweite kombinierte Misch- und verteilerklappe (15) jeweils zur Luftregelung im linken und rechten Fondbereich des Kraftfahrzeugs vorgesehen sind.

12. Klimaanlage nach einem oder mehreren der Ansprüche 1 bis 11, **dadurch gekennzeichnet, dass** die erste kombinierte Misch- und Verteilerklappe (1) und die zweite kombinierte Misch- und Verteilerklappe (15) in der Trennwand (17), welche zwischen derersten kombinierten Misch- und Verteilerklappe (1) und der zweiten kombinierten Misch- und Verteilerklappe (15) vorgesehen ist, gelagert sind.

13. Klimaanlage nach einem oder mehreren der Ansprüche 1 bis 12, dadurch **gekenntzeichnet**, dass die erste kombinierte Misch- und Verteilerklappe (1) in der zweiten kombinierten Misch- und Verteilerklappe (15) gelagert ist.

## Claims

1. Air conditioning system, particularly for a motor vehicle with an air duct housing (16) in which a plurality of air channels is formed, which have at least two supplying air channels comprising a hot air passage and a cold air duct, and at least three secondary air ducts comprising a ventilation channel (B), a footwell duct (F) and a defrost duct (D), wherein a first combined mixing and distribution flap (1) is provided for the regulation of the air temperature and air distribution of a vehicle interior air to be supplied, wherein for the separate control of the air temperature and air distribution in the left and right interior of the motor vehicle, a second combined mixing and distribution flap (15) is provided in addition, wherein the first combined mixing and distribution flap (1) and the second combined mixing and distribution flap (15) are each formed substantially cylindrical as a drum flap, wherein between the first combined mixing and distribution flap (1) and the second combined mixing and distribution flap (15) a partition (17) is provided, and the first combined mixing and distribution flap (1) and the second combined mixing and distribution flap (15) are arranged coaxially to each other, wherein a drive module (24) for driving the mixing and distribution flaps (1, 15) is provided which is arranged centrally between the first combined mixing and distribution flap (1) and the second combined mixing and distribution flap (15).

2. The air conditioning system according to claim 1, **characterized in that** the first combined mixing and distribution flap (1) has a first drive.

3. The air conditioning system according to one or more of claims 1 to 2, **characterized in that** the second combined mixing and distribution flap (15) has a second drive.

4. The air conditioning system according to claim 3, **characterized in that** the first drive and the second drive are arranged in a drive module (24).

5. The air conditioning system according to one or more of claims 1 to 4, **characterized in that** the first combined mixing and distribution flap (1) is provided for the air control in the left half of the vehicle and the second combined mixing and distribution flap (15) is provided for the air control in the right half of the vehicle.

6. The air conditioning system according to one or more of claims 1 to 4, **characterized in that** the first drive and the second drive are separately controllable.

7. The air conditioning system according to one or more of claims 1 to 6, **characterized in that** the first drive and the second drive is formed in each case as a mechanical or electrical drive.

8. The air conditioning system according to one or more of claims 1 to 7, **characterized in that** the air conditioning system is formed at least as a two-zone air conditioning system.

9. The air conditioning system according to one or more of claims 1 to 8, **characterized in that** in each of the first combined mixing and distribution flap (1) and the second combined mixing and distribution flap (15) a bypass to a defrost duct (D) is provided.

10. The air conditioning system according to one or more of claims 1 to 9, **characterized in that** the first and the second combined mixing and distribution flap (1, 15) can be synchronized with each other in defrost mode.

11. The air conditioning system according to one or more of claims 1 to 10, **characterized in that** if the air conditioning system is designed as multi-zone air conditioning system, a further first combined mixing and distribution flap (1) and a further second combined mixing and distribution flap (15) are respectively provided for air control in the left and right rear zone of the motor vehicle.

12. The air conditioning system according to one or more of claims 1 to 11, **characterized in that** the first combined mixing and distribution flap (1) and the second combined mixing and distribution flap (15) are mounted in the partition (17) which is provided between the first combined mixing and distribution flap (1) and the second combined mixing and distribution flap (15).

13. The air conditioning system according to one or more of claims 1 to 12, **characterized in that** the first combined mixing and distribution flap (1) is mounted in the second combined mixing and distribution flap (15) .

## Revendications

1. Système de climatisation, en particulier pour un véhicule automobile, comprenant un carter de guidage d'air (16) dans lequel est configurée une pluralité de conduits d'air qui présentent au moins deux conduits d'arrivée d'air qui comprennent un conduit d'air chaud et un conduit d'air froid, et qui présentent au moins trois conduits d'air qui se prolongent, lesquels conduits d'air comprennent un conduit de ventilation (B), un conduit menant à l'espace pour les pieds (F) et un conduit de dégivrage (D) où, pour la régulation de la température de l'air, et de la répartition de l'air à fournir à l'habitacle d'un véhicule, il est prévu un premier volet mélangeur et répartiteur combiné (1) où, pour la régulation séparée de la température de l'air, et de la répartition de l'air, dans la partie gauche et droite de l'habitacle du véhicule automobile, il est prévu en outre un second volet mélangeur et répartiteur combiné (15), où le premier volet mélangeur et répartiteur combiné (1) et le second volet mélangeur et répartiteur combiné (15) sont configurés à chaque fois pratiquement de façon cylindrique comme un volet à tambour, où il est prévu, entre le premier volet mélangeur et répartiteur combiné (1) et le second volet mélangeur et répartiteur combiné (15), une paroi de séparation (17), et le premier volet mélangeur et répartiteur combiné (1) et le second volet mélangeur et répartiteur combiné (15) sont disposés de façon coaxiale l'un par rapport à l'autre, où il est prévu un module d'entraînement (24) servant à l'entraînement des volets mélangeurs et répartiteurs (1, 15), lequel module d'entraînement est disposé de façon centrale entre le premier volet mélangeur et répartiteur (1) et le second volet mélangeur et répartiteur (15).

2. Système de climatisation selon la revendication 1, **caractérisé en ce que** le premier volet mélangeur et répartiteur combiné (1) présente un premier entraînement.

3. Système de climatisation selon l'une ou plusieurs des revendications 1 et 2, **caractérisé en ce que** le second volet mélangeur et répartiteur combiné (15) présente un second entraînement.

4. Système de climatisation selon la revendication 3, **caractérisé en ce que** le premier entraînement et le second entraînement sont disposés dans le module d'entraînement (24).

5. Système de climatisation selon l'une quelconque ou plusieurs des revendications 1 à 4, **caractérisé en ce que** le premier volet mélangeur et répartiteur combiné (1) est prévu pour la régulation de l'air dans la moitié gauche du véhicule, et le second volet mélangeur et répartiteur combiné (15) est prévu pour la régulation de l'air dans la moitié droite du véhicule.

6. Système de climatisation selon l'une quelconque ou plusieurs des revendications 1 à 4, **caractérisé en ce que** le premier entraînement et le second entraînement peuvent être commandés de façon séparée.

7. Système de climatisation selon l'une quelconque ou plusieurs des revendications 1 à 6, **caractérisé en ce que** le premier entraînement et le second entraînement sont conçus à chaque fois comme un entraînement mécanique ou électrique.

8. Système de climatisation selon l'une quelconque ou plusieurs des revendications 1 à 7, **caractérisé en ce que** le système de climatisation est conçu au moins comme un système de climatisation bizone.

9. Système de climatisation selon l'une quelconque ou plusieurs des revendications 1 à 8, **caractérisé en ce qu'**une dérivation par rapport au conduit de dégivrage (D) est prévue à chaque fois dans le premier volet mélangeur et répartiteur combiné (1) et dans le second volet mélangeur et répartiteur combiné (15).

10. Système de climatisation selon l'une quelconque ou plusieurs des revendications 1 à 9, **caractérisé en ce que** les premier et second volets mélangeurs et répartiteurs combinés (1, 15) peuvent être synchronisés l'un par rapport à l'autre, au cours du fonctionnement en mode dégivrage.

11. Système de climatisation selon l'une quelconque ou plusieurs des revendications 1 à 10, **caractérisé en ce que**, dans le cas d'une conception du système de climatisation comme un système de climatisation à zones multiples, un autre premier volet mélangeur et répartiteur combiné (1) et un autre second volet mélangeur et répartiteur combiné (15) sont prévus à chaque fois pour la régulation de l'air dans la partie gauche et droite de la zone arrière du véhicule automobile.

12. Système de climatisation selon l'une quelconque ou plusieurs des revendications 1 à 11, **caractérisé en ce que** le premier volet mélangeur et répartiteur combiné (1) et le second volet mélangeur et répartiteur combiné (15) sont logés dans la paroi de séparation (17) qui est prévue entre le premier volet mélangeur et répartiteur combiné (1) et le second volet mélangeur et répartiteur combiné (15).

13. Système de climatisation selon l'une quelconque ou plusieurs des revendications 1 à 12, **caractérisé en ce que** le premier volet mélangeur et répartiteur combiné (1) est logé dans le second volet mélangeur et répartiteur combiné (15).
